(19) **Europäisches Patentamt / European Patent Office / Office européen des brevets**

(11) **EP 4 744 993 A1**

(12) **EUROPEAN PATENT APPLICATION**

(43) Date of publication:
**20.05.2026 Bulletin 2026/21**

(21) Application number: **25207221.0**

(22) Date of filing: **07.10.2025**

(51) International Patent Classification (IPC):
**B60W 30/14** (2006.01)    **B60W 50/06** (2006.01)

(52) Cooperative Patent Classification (CPC):
**B60W 30/143; B60W 50/06;** B60W 2050/065;
B60W 2520/10; B60W 2554/802; B60W 2555/60;
B60W 2720/10; B60W 2720/106

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.10.2024 JP 2024178911**

(71) Applicant: **HONDA MOTOR CO., LTD.**
**Tokyo 105-8404 (JP)**

(72) Inventor: **GOTO, Takeru**
**Saitama, 351-0193 (JP)**

(74) Representative: **Kiwit, Benedikt**
**Mitscherlich PartmbB**
**Karlstraße 7**
**80333 München (DE)**

(54) **VEHICLE CONTROL DEVICE, VEHICLE CONTROL METHOD, AND STORAGE MEDIUM**

(57) A vehicle control device includes an objective function decision part configured to decide a combination of an objective function, in which acceleration in future travel is designated as a control variable formulated using an auxiliary variable corresponding to a predetermined scene assumed from a positional relationship with another traffic participant during travel of a host vehicle, and a restricting conditional formula for setting a restriction on the future travel, in accordance with a recognized surrounding situation of the host vehicle; and a speed decision part configured to decide a travel speed in the future travel of the host vehicle on the basis of the combination of the objective function and the restricting conditional formula. The auxiliary variable is a variable related to a vehicle speed limit, a degree of urgency, tracking, and collision avoidance corresponding to the scene.

FIG. 2

100

EP 4 744 993 A1

**Description**

BACKGROUND OF THE INVENTION

Field of the Invention

The present invention relates to a vehicle control device, a vehicle control method, and a storage medium.

Description of Related Art

Recently, the practical application of automated driving for automatically controlling the travel of a vehicle has progressed. Research and development (R&D) of this automated driving technology aims to further improve traffic safety and convenience.

Conventionally, technology for a vehicle control device that performs an action plan related to an optimal speed by calculating a state value in the control of a vehicle by automated driving is disclosed (see, for example, Japanese Unexamined Patent Application, First Publication No. 2022-107296). This conventional technology can take into account the constraints necessary for travel on general roads. However, this conventional technology does not take into account the ride comfort of the vehicle during automated driving.

On the other hand, recently, research has been conducted on automated control when a vehicle turns at an intersection or crosses a lane, for example, using a multi-profile quadratic programming (MPQP) method or the like. However, in this case, in automated control, it may be difficult to calculate an appropriate travel speed in consideration of a change in a speed limit in accordance with a position of a host vehicle during the travel. Furthermore, when there is another vehicle in another travel lane, it is necessary to perform a process of the action plan in parts and therefore the processing load may be increased.

SUMMARY OF THE INVENTION

Incidentally, in automated driving technology, to improve the ride comfort of the vehicle, it is preferable to suppress the occurrence of a jerk (lively motion) according to a change in a travel speed during automated driving. However, in conventional technology, it is necessary to quantize the jerk. Also, in conventional technology, because it is necessary to finely perform a jerk quantification process so that the ride comfort is continuously optimized during automated driving, there is a problem that the number of quantifications increases, which is a factor in increasing an amount of calculation, i.e., a factor in increasing the processing load related to automated driving.

Aspects of the present invention provide a vehicle control device, a vehicle control method, and a storage medium that can provide preferred automated driving control even in a scene in which it is necessary to consider a positional relationship with other traffic participants during the travel. Aspects of the present invention provide more preferred automated control according to a situation between the host vehicle and other traffic participants other than the host vehicle, contributing to the development of a sustainable transportation system.

A vehicle control device, a vehicle control method, and a storage medium according to the present invention adopt the following configurations.

(1): According to an aspect of the present invention, there is provided a vehicle control device including: an objective function decision part configured to decide a combination of (i) an objective function, in which acceleration in future travel is designated as a control variable formulated using an auxiliary variable corresponding to a predetermined scene assumed from a positional relationship with another traffic participant during travel of a host vehicle, and a (ii) restricting conditional formula for setting a restriction on the future travel, in accordance with a recognized surrounding situation of the host vehicle; and a speed decision part configured to decide a travel speed in the future travel of the host vehicle on the basis of the combination of the objective function and the restricting conditional formula, wherein the auxiliary variable is a variable related to a vehicle speed limit, a degree of urgency, tracking, and collision avoidance corresponding to the scene.

(2): In the above-described aspect (1), the restricting conditional formula includes conditional formulas for setting restrictions related to a vehicle speed, acceleration, and a jerk when the host vehicle is allowed to travel, and a term for adding 1/2 of the acceleration during the travel of the host vehicle is provided in the restricting conditional formula corresponding to the vehicle speed.

(3): In the above-described aspect (2), the restricting conditional formula further includes a conditional formula for setting a restriction related to a process for tracking a preceding vehicle and a process for avoiding a collision with the other traffic participant, and a term for adjusting a travel speed during the travel of the host vehicle is provided in the restricting conditional formula corresponding to the tracking.

(4): In any one of the above-described aspects (1) to (3), the objective function decision part decides a combination of a first objective function formulated using a first auxiliary variable related to the vehicle speed limit and a first restricting conditional formula corresponding to a vehicle speed when the scene is a first scene in which a speed limit of a lane in which the host vehicle will travel is changed, and the first restricting conditional formula has a term for adding a restriction based on the first auxiliary variable and a difference between maximum speeds of the host vehicle before and after the speed limit is changed.

(5): In any one of the above-described aspects (1) to (4), the objective function decision part decides a combination of (i) a second objective function formulated using a second auxiliary variable related to the degree of urgency based on a positional relationship between the host vehicle and the preceding vehicle and (ii) a second restricting conditional formula, if a preceding vehicle is already a tracking target when the scene is a second scene in which the host vehicle tracks the preceding vehicle, and the second restricting conditional formula includes a $(2\text{-}1)^{th}$ restricting conditional formula in which a term for adding the second auxiliary variable to the restricting conditional formula corresponding to the tracking is provided and a $(2\text{-}2)^{th}$ restricting conditional formula corresponding to the collision avoidance indicating a position of the preceding vehicle.

(6): In the above-described aspect (5), the objective function decision part decides a combination of the second objective function and a third restricting conditional formula if the preceding vehicle is a new tracking target when the scene is the second scene in which the host vehicle tracks the preceding vehicle, and the third restricting conditional formula has a $(2\text{-}3)^{th}$ restricting conditional formula in which a term for adding a third auxiliary variable related to the tracking is further provided in the $(2\text{-}1)^{th}$ restricting conditional formula and a $(2\text{-}4)^{th}$ restricting conditional formula in which a term for adding the third auxiliary variable is further provided in the $(2\text{-}2)^{th}$ restricting conditional formula.

(7): In any one of the above-described aspects (1) to (6), the objective function decision part decides a combination of the objective function and the restricting conditional formula related to the collision avoidance if the other traffic participant is already an avoidance target when the scene is a third scene for avoiding a collision with the other traffic participant.

(8): In the above-described aspect (7), the objective function decision part decides a combination of the objective function and a fourth restricting conditional formula if the other traffic participant is a new avoidance target when the scene is the third scene for avoiding a collision with the other traffic participant, and the fourth restricting conditional formula has a term of a fourth auxiliary variable related to the collision avoidance in the restricting conditional formula related to the collision avoidance.

(9): According to an aspect of the present invention, there is provided a vehicle control method including: deciding, by a computer, a combination of an objective function in which acceleration in future travel is designated as a control variable formulated using an auxiliary variable corresponding to a predetermined scene assumed from a positional relationship with another traffic participant during travel of a host vehicle and a restricting conditional formula for setting a restriction on the future travel in accordance with a recognized surrounding situation of the host vehicle; and deciding, by the computer, a travel speed in the future travel of the host vehicle on the basis of the combination of the objective function and the restricting conditional formula, wherein the auxiliary variable is a variable related to a vehicle speed limit, a degree of urgency, tracking, and collision avoidance corresponding to the scene.

(10): According to an aspect of the present invention, there is provided a computer-readable non-transitory storage medium storing a program for causing a computer to: decide a combination of an objective function in which acceleration in future travel is designated as a control variable formulated using an auxiliary variable corresponding to a predetermined scene assumed from a positional relationship with another traffic participant during travel of a host vehicle and a restricting conditional formula for setting a restriction on the future travel in accordance with a recognized surrounding situation of the host vehicle; and decide a travel speed in the future travel of the host vehicle on the basis of the combination of the objective function and the restricting conditional formula, wherein the auxiliary variable is a variable related to a vehicle speed limit, a degree of urgency, tracking, and collision avoidance corresponding to the scene.

According to the above-described aspects (1) to (10), it is possible to perform a preferred automated driving control process even in scenes where it is necessary to take into account a positional relationship with other traffic participants during the travel.

BRIEF DESCRIPTION OF THE DRAWINGS

FIG. 1 is a configuration diagram of a vehicle system using a vehicle control device according to an embodiment.
FIG. 2 is a diagram of a functional configuration of a first controller and a second controller.
FIG. 3 is a diagram of an example of a basic scene when an objective function is formulated.

FIG. 4 is a diagram of an example of a first scene in which an auxiliary variable is applied to an objective function.
FIG. 5 is a diagram of an example of a second scene in which an auxiliary variable is applied to an objective function.
FIG. 6 is a diagram of an example of a third scene in which an auxiliary variable is applied to an objective function.
FIG. 7 is a flowchart showing an example of a flow of a process for deciding an objective function executed in an objective function decision part.

DETAILED DESCRIPTION OF THE INVENTION

Hereinafter, an embodiment of a vehicle control device, a vehicle control method, and a storage medium in which a program is stored according to the present invention will be described with reference to the drawings.

[Overall configuration]

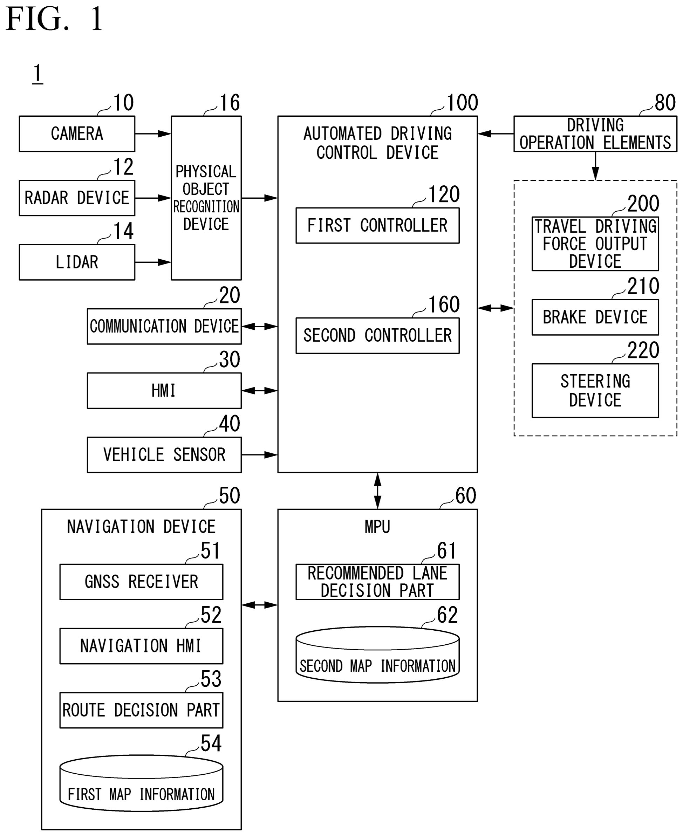

FIG. 1 is a configuration diagram of a vehicle system 1 using a vehicle control device according to an embodiment. A vehicle where the vehicle system 1 is mounted is, for example, a vehicle such as a two-wheeled vehicle, a three-wheeled vehicle, or a four-wheeled vehicle, and a drive source thereof is an internal combustion engine such as a diesel engine or a gasoline engine, an electric motor, or a combination thereof. The electric motor operates using electric power generated by a power generator connected to the internal combustion engine or electric power that is supplied when a secondary battery or a fuel cell is discharged.

For example, the vehicle system 1 includes a camera 10, a radar device 12, a light detection and ranging (LIDAR) 14, a physical object recognition device 16, a communication device 20, a human machine interface (HMI) 30, a vehicle sensor 40, a navigation device 50, a map positioning unit (MPU) 60, driving operation elements 80, an automated driving control device 100, a travel driving force output device 200, a brake device 210, and a steering device 220. Such devices and equipment are connected to each other through a multiplex communication line such as a controller area network (CAN) communication line, a serial communication line, a wireless communication network, or the like. The configuration shown in FIG. 1 is merely an example and some of the constituent elements may be omitted or other constituent elements may be further added.

For example, the camera 10 is a digital camera using a solid-state imaging element such as a charge-coupled device (CCD) or a complementary metal oxide semiconductor (CMOS). The camera 10 is attached to any location on a vehicle (hereinafter, a host vehicle M) where the vehicle system 1 is mounted. When the view in front of the host vehicle M is imaged, the camera 10 is attached to an upper part of a front windshield, a rear surface of a rearview mirror, or the like. For example, the camera 10 periodically and iteratively images the surroundings of the host vehicle M. The camera 10 may be a stereo camera.

The radar device 12 radiates radio waves such as millimeter waves around the host vehicle M and detects at least a position of a physical object (a distance from the physical object and a direction of the physical object) by detecting radio waves (reflected waves) reflected by the physical object. The radar device 12 is attached to any location on the host vehicle M. The radar device 12 may detect a position and a speed of the physical object in a frequency-modulated continuous wave (FM-CW) scheme.

The LIDAR 14 radiates light (or electromagnetic waves having a wavelength close to that of light) around the host vehicle M and measures scattered light. The LIDAR 14 detects a distance from a target on the basis of a period of time from light emission to light reception. The radiated light is, for example, pulsed laser light. The LIDAR 14 is attached to any location of the host vehicle M.

The physical object recognition device 16 performs a sensor fusion process on detection results from some or all of the camera 10, the radar device 12, and the LIDAR 14 to recognize a position, type, speed, and the like of the physical object. The physical object recognition device 16 outputs a recognition result to the automated driving control device 100. The physical object recognition device 16 may output detection results of the camera 10, the radar device 12, and the LIDAR 14 to the automated driving control device 100 as they are. The physical object recognition device 16 may be omitted from the vehicle system 1.

The communication device 20, for example, communicates with another vehicle located in the vicinity of the host vehicle M using a cellular network, a Wi-Fi network, Bluetooth (registered trademark), dedicated short-range communication (DSRC), or the like or communicates with various types of server devices via a radio base station.

The HMI 30 outputs various types of information to occupants of the host vehicle M and receives input operations from the occupants. The HMI 30 includes various types of display devices, speakers, buzzers, touch panels, switches, keys, and the like.

The vehicle sensor 40 includes a vehicle speed sensor configured to detect the speed of the host vehicle M, an acceleration sensor configured to detect acceleration, a yaw rate sensor configured to detect an angular velocity around a vertical axis, a direction sensor configured to detect a direction of the host vehicle M, and the like.

For example, the navigation device 50 includes a global navigation satellite system (GNSS) receiver 51, a navigation HMI 52, and a route decision part 53. The navigation device 50 holds first map information 54 in a storage device such as a hard disk drive (HDD) or a flash memory. The GNSS receiver 51 identifies a position of the host vehicle M on the basis of a signal received from a GNSS satellite. The position of the host vehicle M may be identified or complemented by an inertial navigation system (INS) using an output of the vehicle sensor 40. The navigation HMI 52 includes a display device, a speaker, a touch panel, a key, and the like. The navigation HMI 52 may be partly or wholly shared with the above-described HMI 30. For example, the route decision part 53 decides a route (hereinafter referred to as a route on a map) from the position of the host vehicle M identified by the GNSS receiver 51 (or any input position) to a destination input by the occupant using the navigation HMI 52 with reference to the first map information 54. The first map information 54 is, for example, information in which a road shape is expressed by a link indicating a road and nodes connected by the link. The first map information 54 may include the curvature of a road, point of interest (POI) information and the like. The route on the map is output to the MPU 60. The navigation device 50 may provide route guidance using the navigation HMI 52 on the basis of a route on the map. The navigation device 50 may be implemented, for example, by functions of terminal devices such as smartphones and tablet terminals owned by the occupant. The navigation device 50 may transmit a current position and a destination to a navigation server via the communication device 20 and acquire a route equivalent to the route on the map from the navigation server.

For example, the MPU 60 includes a recommended lane decision part 61 and holds second map information 62 in a storage device such as an HDD or a flash memory. The recommended lane decision part 61 divides the route on the map provided from the navigation device 50 into a plurality of blocks (e.g., divides the route every 100 [m] in a travel direction of the vehicle), and decides a recommended lane for each block with reference to the second map information 62. The recommended lane decision part 61 decides in what lane numbered from the left the vehicle will travel. The recommended lane decision part 61 decides the recommended lane so that the host vehicle M can travel along a reasonable route for traveling to a branching destination when there is a branch point on the route on the map.

The second map information 62 is map information with higher accuracy than the first map information 54. The second map information 62 includes, for example, information about the center of lanes, information about lane boundaries, and the like. The second map information 62 may include road information, traffic regulation information, address information (addresses and postal codes), facility information, telephone number information, and the like. The second map information 62 may be updated at any time when the communication device 20 communicates with another device.

For example, the driving operation elements 80 include an accelerator pedal, a brake pedal, a shift lever, a steering wheel, and other operation elements. The steering wheel does not necessarily have to be annular, but the steering wheel can be in the form of a special-shaped steering wheel, joystick, button, or the like. A sensor configured to detect an amount of operation or the presence or absence of an operation is attached to the driving operation element 80 and a detection result of the sensor is output to the automated driving control device 100 or some or all of the travel driving force output device 200, the brake device 210, and the steering device 220.

The automated driving control device 100 includes, for example, a first controller 120 and a second controller 160. Each of the first controller 120 and the second controller 160 is implemented, for example, by a hardware processor such as a central processing unit (CPU) executing a program (software). Some or all of the above constituent elements may be implemented by hardware (including a circuit; circuitry) such as a large-scale integration (LSI) circuit, a system on chip (SOC), an application-specific integrated circuit (ASIC), a programmable logic device (e.g., a simple programmable logic device (SPLD) or a complex programmable logic device (CPLD), a field-programmable gate array (FPGA)), or a graphics processing unit (GPU) or may be implemented by software and hardware in cooperation. The program may be pre-stored in a storage device (a storage device including a non-transitory storage medium) such as an HDD or a flash memory of the automated driving control device 100 or may be stored in a removable storage medium such as a DVD or a CD-ROM and installed in an HDD or a flash memory of the automated driving control device 100 when the storage medium (the non-transitory storage medium) is mounted on a drive device. The automated driving control device 100 is an example of a "vehicle control device."

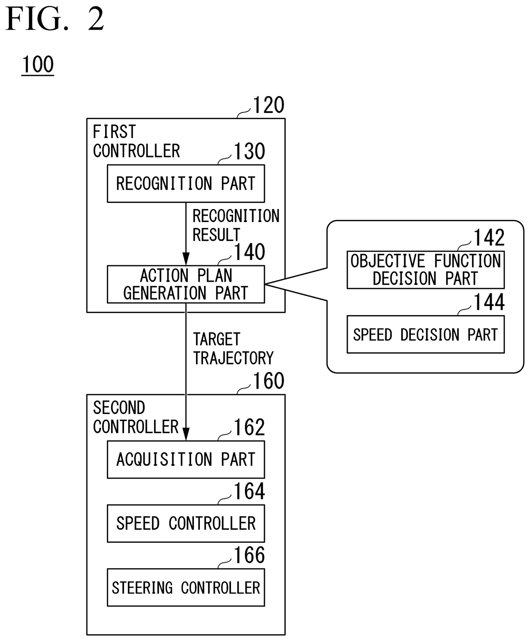

FIG. 2 is a functional configuration diagram of the first controller 120 and the second controller 160. The first controller 120 includes, for example, a recognition part 130 and an action plan generation part 140.

The first controller 120, for example, implements a function of artificial intelligence (AI) and a function of a predetermined model in parallel. For example, in the first controller 120, an "intersection recognition" function may be implemented by executing intersection recognition based on deep learning or the like and recognition based on previously given conditions (signals, road signs, or the like, with which pattern matching is possible) in parallel and performing comprehensive evaluation by assigning scores to both recognitions. Thereby, the reliability of automated driving is secured.

The recognition part 130 recognizes a state such as the position, speed, or acceleration of the physical object near the host vehicle M on the basis of the information input from the camera 10, the radar device 12, and the LIDAR 14 through the physical object recognition device 16. The position of the physical object, for example, may be recognized as a position of an absolute coordinate system having a representative point of the host vehicle M (a center of gravity, a drive shaft center, or the like) as the origin and used for control. The position of the physical object may be represented by a representative point such as the center of gravity or a corner of the physical object or may be represented by an area. The "state" of the physical object may include the acceleration or jerk of the physical object, or the "action state" (e.g., whether or not the vehicle is changing lanes or is about to change lanes).

For example, the recognition part 130 recognizes a lane in which the host vehicle M is traveling (a travel lane). For example, the recognition part 130 recognizes the travel lane by comparing a pattern of road markings (e.g., an arrangement of solid lines and broken lines) obtained from the second map information 62 with a pattern of road markings in the vicinity of the host vehicle M recognized from an image captured by the camera 10. The recognition part 130 may recognize the travel lane by recognizing a travel path boundary (a road boundary) including a road marking, a road shoulder, a curb, a median strip, a guardrail, or the like as well as a road marking. In this recognition, a position of the host vehicle M acquired from the navigation device 50 or a processing result of the INS may be taken into account. The recognition part 130 recognizes stop lines, obstacles, red lights, toll booths, and other road events.

When the travel lane is recognized, the recognition part 130 recognizes a position or an orientation of the host vehicle M with respect to the travel lane. For example, the recognition part 130 may recognize a deviation of a reference point of the host vehicle M from the center of the lane and an angle formed between the travel direction of the host vehicle M and a line connected to the center of the lane as a relative position and orientation of the host vehicle M related to the travel lane. Alternatively, the recognition part 130 may recognize a position of the reference point of the host vehicle M related to one side end portion (a road marking or a road boundary) of the travel lane or the like as a relative position of the host vehicle M related to the travel lane.

The action plan generation part 140 automatically generates a target trajectory for the host vehicle M to travel in the future (without relying on the driver's operation) so that the host vehicle M can travel in the recommended lane determined by the recommended lane decision part 61 in principle and take an action for a surrounding situation of the host vehicle M. For example, the target trajectory includes a speed element. For example, the target trajectory is represented by sequentially arranging points (trajectory points) at which the host vehicle M is required to arrive. The trajectory points are points at which the host vehicle M is required to arrive for each predetermined travel distance (e.g., about several meters [m]) in a distance along a road. In addition, a target speed and target acceleration for each predetermined sampling time (e.g., about 0.x [sec] where x is a decimal number) is generated as a part of the target trajectory. The trajectory point may be a position where the host vehicle M is required to arrive at the sampling time for each predetermined sampling time. In this case, information about the target speed and the target acceleration is represented by an interval between the trajectory points.

The action plan generation part 140 may set an automated driving event when a target trajectory is generated. Automated driving events include a constant-speed traveling event, a low-speed tracking traveling event, a lane change event, a branching event, a merging event, a takeover event, and the like. The action plan generation part 140 generates a target trajectory according to an activated event.

The action plan generation part 140 generates a target speed and target acceleration in accordance with a lane in which the host vehicle M is traveling (a travel lane) and a situation of other adjacent travel lanes (adjacent lanes) recognized by the recognition part 130. The action plan generation part 140 includes, for example, an objective function decision part 142 and a speed decision part 144. The action plan generation part 140 generates a target speed and target acceleration using the objective function decision part 142 and the speed decision part 144, i.e., creates an action plan related to the speed (hereinafter referred to as a "speed plan"). The objective function decision part 142 decides a formulated objective function to be used when a speed plan is created in accordance with a situation of the lane in which the host vehicle M is traveling (a travel lane) and a state of other adjacent travel lanes (adjacent lanes) recognized by the recognition part 130 (hereinafter referred to as a "travel situation of the host vehicle M"). The objective function is a function in which variables for an action capable of being taken for a specific scene in which it is necessary to consider a positional relationship with other traffic participants (e.g., people, bicycles, and vehicles) during travel on a general road are formulated. The speed decision part 144 decides a preferred travel speed for the host vehicle M in future travel on the basis of the objective function decided by the objective function decision part 142. Details regarding the objective function decision part 142, the speed decision part 144, and the formulation of the objective function will be described below.

The second controller 160 controls the travel driving force output device 200, the brake device 210, and the steering device 220 so that the host vehicle M passes through the target trajectory generated by the action plan generation part 140 at a scheduled time.

The second controller 160 includes, for example, an acquisition part 162, a speed controller 164, and a steering controller 166. The acquisition part 162 acquires information about a target trajectory (trajectory points) generated by the action plan generation part 140 and causes a memory (not shown) to store the information. The speed controller 164 controls the travel driving force output device 200 or the brake device 210 on the basis of the speed element associated with the target trajectory stored in the memory. The steering controller 166 controls the steering device 220 in accordance with a degree of curvature of the target trajectory stored in the memory. The processes of the speed controller 164 and the steering controller 166, for example, are implemented by a combination of feedforward control and feedback control. As an example, the steering controller 166 executes a combination of feedforward control according to the curvature of the road in front of the host vehicle M and feedback control based on the deviation from the target trajectory.

Returning to FIG. 1, the travel driving force output device 200 outputs a travel driving force (torque) for enabling the traveling of the vehicle to driving wheels. For example, the travel driving force output device 200 includes a combination of an internal combustion engine, an electric motor, a transmission, and the like, and an electronic control unit (ECU) that controls the internal combustion engine, the electric motor, the transmission, and the like. The ECU controls the above-described constituent elements in accordance with information input from the second controller 160 or information input from the driving operation element 80.

For example, the brake device 210 includes a brake caliper, a cylinder configured to transfer hydraulic pressure to the brake caliper, an electric motor configured to generate hydraulic pressure in the cylinder, and a brake ECU. The brake ECU controls the electric motor in accordance with the information input from the second controller 160 or the information input from the driving operation element 80 so that brake torque according to a braking operation is output to each wheel. The brake device 210 may include a mechanism configured to transfer the hydraulic pressure generated according to an operation on the brake pedal included in the driving operation element 80 to the cylinder via a master cylinder as a backup. The brake device 210 is not limited to the above-described configuration and may be an electronically controlled hydraulic brake device configured to control an actuator in accordance with information input from the second controller 160 and transfer the hydraulic pressure of the master cylinder to the cylinder.

For example, the steering device 220 includes a steering ECU and an electric motor. For example, the electric motor changes a direction of steerable wheels by applying a force to a rack and pinion mechanism. The steering ECU drives the electric motor in accordance with the information input from the second controller 160 or the information input from the driving operation element 80 to change the direction of the steerable wheels.

[Objective function]

The objective function and its formulation will be described below. The objective function is formulated for each predetermined scene on a general road by deriving a state equation assuming that the jerk (lively motion) of the host vehicle M is constant and employing this state equation.

Jerk j of the host vehicle M at the time of a change from time t to time t+1 is expressed by the following formula (1).

$$ j = \left( a_{(t+1)} - a_t \right) / \Delta t \qquad \cdots \ (1) $$

In the above formula (1), a denotes acceleration. The acceleration a is defined as a control variable when the objective function is formulated. From jerk j expressed by the above formula (1) and a general equation of motion, a state equation such as the following formula (2) is derived. The state equation of the following formula (2) denotes the vertical movement of the host vehicle M while the host vehicle M is traveling.

$$ \begin{pmatrix} s_{(t+1)} \\ v_{(t+1)} \\ a_{(t+1)} \end{pmatrix} = \begin{pmatrix} 1 & \Delta t & \Delta t^2/3 \\ 0 & 1 & \Delta t/2 \\ 0 & 0 & 0 \end{pmatrix} \begin{pmatrix} s_t \\ v_t \\ a_t \end{pmatrix} + \begin{pmatrix} \Delta t^2/6 \\ \Delta t/2 \\ 1 \end{pmatrix} a_{(t+1)} $$

$$ \cdots \ (2) $$

In the above formula (1), s denotes a position of the host vehicle M, v denotes a speed of the host vehicle M, a denotes the acceleration of the host vehicle M, and t denotes time. The position s and the speed v are in a linear relationship with respect to the acceleration a. In the above formula (1), a first term on the left side denotes a state vector of the host vehicle M at the next time t+1, a first term on the right side denotes a state vector of the host vehicle M at a current time t, and a second term on the right side denotes an action of the host vehicle M, i.e., a change in the speed in the future travel of the host vehicle M. The control variable, i.e., the acceleration a, is included in the state vector of the above formula (2). Here, if the state vector of the host vehicle M at time t+1 is defined as "$x_{(t+1)}$" and the state vector of the host vehicle M at current time t is defined as "xt," the matrix is denoted by "A," and the vector is denoted by "B," the above formula (2) can be expressed as the following formula (3).

$$x_{(t+1)} = Ax_t + Ba_{(t+1)} \qquad \cdots (3)$$

When the initial state $x_0$ is given as the initial state of the state vector xt in the above formula (3) and the control input [$a_1$, ..., $a_n$] is given as the input of the control variable (acceleration $a_{(t+1)}$), the action of the host vehicle M expressed as in the above formula (3) can be expressed as a formula equivalent to typical model predictive control (MPC) as in the following formula (4).

$$\begin{pmatrix} x_1 \\ x_2 \\ \vdots \\ x_n \end{pmatrix} = \begin{pmatrix} A \\ A^2 \\ \vdots \\ A^n \end{pmatrix} x_0 + \begin{pmatrix} B & 0 & \cdots & 0 \\ AB & B & \cdots & 0 \\ \vdots & \vdots & \vdots & \vdots \\ A^{n-1}B & A^{n-2}B & \cdots & B \end{pmatrix} \begin{pmatrix} a_1 \\ a_2 \\ \vdots \\ a_n \end{pmatrix}$$

$$\cdots (4)$$

In formulating the objective function, the control input [$a_1$, ..., $a_n$] in the above formula (4) is used as the action of the host vehicle M to be sought, i.e., the action of the host vehicle M to be optimized, and the objective function is formulated for each predetermined scene on a general road.

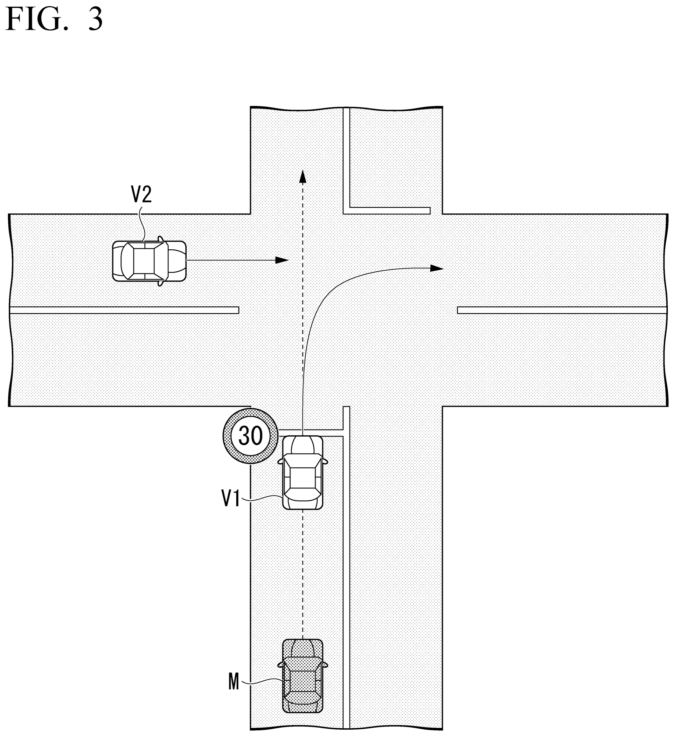

Here, the scenes on a general road to be considered when the objective function is formulated will be described. FIG. 3 is a diagram showing an example of a scene that is used as the basis for formulating the objective function. In FIG. 3, an example including a plurality of scenes to be assumed on a general road when the host vehicle M travels straight through an intersection is shown. More specifically, in FIG. 3, for example, a scene in which the host vehicle M travels while tracking another vehicle V1 (preceding vehicle) traveling in front of the host vehicle M in the current travel lane, a scene in which the host vehicle M avoids another vehicle V2 traveling in another travel lane, which intersects the current travel lane, and crossing in front of the host vehicle M (avoids a collision with the other vehicle V2), a scene in which the speed limit of the current travel lane is changed, a scene in which the host vehicle M temporarily stops at a stop line indicated in the current travel lane, a scene in which the host vehicle M decelerates when the other vehicle V1 turns at an intersection (turns right in FIG. 3), and the like are assumed.

In the formulation of the objective function, basic functions for generating the target speed and target acceleration are formulated as shown in the following formulas (5) to (16). Incidentally, when a target trajectory is generated (here, a speed plan related to the target speed or target acceleration is generated), it is preferable to consider a safety margin. The safety margin can be easily added. However, in the following description, consideration of the safety margin will be omitted for ease of description.

In the formulation of the objective function, first, a basic objective function such as the following formula (5) is formulated.

$$\underset{a \in \mathbb{R}^n}{\text{maximize}} \quad \sum_{t=1}^{n} \omega_t s_t \qquad \cdots (5)$$

The above formula (5) is an objective function that maximizes a sum of positions $s_t$, which are variables of the position s of the host vehicle M at time t, from time t = 1 to time t = n, i.e., an objective function for the host vehicle M that aims to maximize a travel distance while minimizing a travel time. In the following description, for ease of description, a sum of positions st from time t = 1 to time t = n is referred to as a "total position $s_t$." In the above formula (5), $\omega_t$: denotes a value indicating a weight of the position $s_t$ at each time t. However, in the following description, for ease of description, the weight $\omega_t$ is not taken into account, i.e., the weight $\omega_t$ = 1. The objective function of the above formula (5) is a linear plan model that evaluates only the travel distance of the host vehicle M.

Also, in the basic objective function, restricting conditional formulas for setting restrictions (limits) in relation to the speed v, acceleration a, and jerk j of the host vehicle M are defined. More specifically, a restricting conditional formula such as the following formula (6) is defined for an upper limit of the speed v, and a restricting conditional formula such as the following formula (7) is defined for a lower limit of the speed v. In the following description, the restricting conditional formula for the speed v is referred to as a "vehicle-speed-restricting conditional formula." The following formulas (6) and (7) are examples of a "conditional formula for setting a restriction on the vehicle speed."

$$ v_t + a_t \Delta t / 2 \leq v_{\max} \quad \cdots (6) $$

$$ v_t + a_t \Delta t / 2 \geq 0 \quad \cdots (7) $$

In the above formulas (6) and (7), vt denotes a variable for the speed v of the host vehicle M at time t and at denotes a variable for the acceleration a of the host vehicle M at time t. In the above formula (6), $v_{\max}$ denotes a maximum speed of the host vehicle M in the speed plan.

A restricting conditional formula like the following formula (8) is defined for an upper limit of acceleration a and a restricting conditional formula like the following formula (9) is defined for a lower limit of acceleration a. In the following description, the restricting conditional formula for the acceleration a is referred to as an "acceleration-restricting conditional formula." The following formulas (8) and (9) are examples of a "conditional formula for setting a restriction on acceleration."

$$ a_t \leq a_{\max} \quad \cdots (8) $$

$$ a_t \geq a_{\min} \quad \cdots (9) $$

In the above formula (8), $a_{\max}$ denotes the maximum acceleration of the host vehicle M in the speed plan. In the above formula (9), $a_{\min}$ denotes the minimum acceleration of the host vehicle M in the speed plan.

A restricting conditional formula like the following formula (10) is defined for an upper limit of jerk j, and a restricting conditional formula like the following formula (11) is defined for a lower limit of jerk j. In the following description, the restricting conditional formula related to jerk j is referred to as a "jerk-restricting conditional formula." The following formulas (10) and (11) are examples of a "conditional formula for setting a restriction on a jerk."

$$ \frac{a_t - a_{(t-1)}}{\Delta t} \leq j_{\max} \quad \cdots (10) $$

$$ \frac{a_t - a_{(t-1)}}{\Delta t} \geq j_{\min} \quad \cdots (11) $$

In the above formula (10), $j_{\max}$ denotes an upper limit of the jerk of the host vehicle M in the speed plan. In the above formula (11), $j_{\min}$ denotes a lower limit of the jerk of the host vehicle M in the speed plan. In the above formulas (10) and (11), $\Delta t$ denotes a discrete time step.

In the objective function shown in the above formula (5) and each of the restricting conditional formulas shown in the above formulas (6) to (11), time t is in a range of 1 to n, as shown in the following formula (12).

$$t \in \left\{ 1, \cdots, n \right\} \quad \cdots \quad (12)$$

Furthermore, in the basic objective function, a restricting conditional formula like the following formula (13) is defined in relation to a scene in which another vehicle (preceding vehicle) is tracked as a tracking target. In the following description, the restricting conditional formula for tracking the tracking target is referred to as a "tracking-restricting conditional formula." The following formula (13) is an example of a "conditional formula for setting a restriction related to a process for tracking the preceding vehicle."

$$v_t + a_t \Delta t / 2 \leq v_{\text{fol}(t)} \left( 1 + \frac{d_{\text{fol}(t)} - d_{\text{idl}(t)}}{d_{\text{idl}(t)}} \right) \quad \cdots \quad (13)$$

In the above formula (13), $v_{\text{fol}(t)}$ denotes a speed of the tracking target at time t, $d_{\text{fol}(t)}$ denotes an actual tracking distance at time t, and both are linearly dependent on the position st. In the above formula (13), $d_{\text{idl}(t)}$ denotes an ideal distance based on a predicted speed of the tracking target at time t. In the tracking-restricting conditional formula shown in the above formula (13), time t is a specific interval range from the start to the end of the tracking, as shown in the following formula (14).

$$t \in \left\{ t_{\text{fs}}, \cdots, t_{\text{fe}} \right\} \quad \cdots \quad (14)$$

In the above formula (14), $t_{\text{fs}}$ denotes a timing at which the tracking starts and $t_{\text{fe}}$ denotes a timing at which the tracking ends.
Furthermore, the basic objective function defines a restricting conditional formula as shown in the following formula (15) in relation to a scene in which a collision with another vehicle is to be avoided. In the following description, the restricting conditional formula for avoiding a collision with another vehicle (an avoidance target) is referred to as a "collision-avoidance-restricting conditional formula." The following formula (15) is an example of a "conditional formula for setting a restriction on avoiding a collision with another traffic participant."

$$s_t \leq s_{avo(t)} \quad \cdots \quad (15)$$

In the above formula (15), $s_{avo(t)}$ denotes a predicted position of the avoidance target at time t. In the collision-avoidance-restricting conditional formula shown in the above formula (15), time t is within a specific interval range from the start to the end of avoidance as shown in the following formula (16). The above formula (15) is an example of the "restricting conditional formula related to the collision avoidance."

$$t \in \left\{ t_{\text{as}}, \cdots, t_{\text{ae}} \right\} \quad \cdots \quad (16)$$

In the above formula (16), $t_{\text{as}}$ denotes a timing at which avoidance starts and $t_{\text{ae}}$ denotes a timing at which avoidance ends.
The objective function decision part 142 decides (i) the basic objective function formulated as shown in the above formula (5) and (ii) each of the restricting conditional formulas defined as shown in the above formulas (6) to (16), in accordance with the travel situation of the host vehicle M recognized by the recognition part 130. Here, in the formulation of the objective function, the tracking-restricting conditional formulas as shown in the above formulas (13) and (14) and the collision-avoidance-restricting conditional formulas as shown in the above formulas (13) and (14) are defined. Thereby, the objective function decision part 142 can decide an objective function (including the restricting conditional formula) corresponding to the expected scenes on general roads where it is necessary to consider a positional relationship with other vehicles during the travel. Furthermore, in the restricting conditional formulas shown in the above formulas (6), (7), and (13), a term as shown in the following formula (17) is provided for the control variable (acceleration at). Thereby, in the speed plan based on the objective function decided by the objective function decision part 142, the change in the speed of the host vehicle M becomes smooth. The following formula (17) is an example of a "term for adding 1/2 of the acceleration during the travel of the host vehicle."

$$a_t \Delta t / 2 \qquad \cdots (17)$$

Incidentally, the scenes on general roads that are the basis for formulating the objective function shown in FIG. 3 include a plurality of scenes in which a jerk occurs in the host vehicle M due to a change in the speed, i.e., there are concerns that the ride comfort of the host vehicle M may become worse. In other words, there are scenes in which an action cannot be taken even in automated control of the host vehicle M using, for example, the multi-profile quadratic programming (MPQP) method and the like. For example, in a scene in which the speed limit of the current travel lane is changed, if the travel speed is changed suddenly at the point where the speed limit changes, the ride comfort of the host vehicle M will become worse. For example, in a scene in which the host vehicle M is traveling while tracking a preceding vehicle (tracking target), when another vehicle traveling in another adjacent travel lane (adjacent lane) changes lanes and is located between the tracking target and the host vehicle M, if the travel speed is suddenly changed, the ride comfort of the host vehicle M will deteriorate. For example, in a scene in which the vehicle is temporarily stopped at a stop line indicated in the current travel lane, if the travel speed is suddenly changed after approaching the stop line, the ride comfort of the host vehicle M will deteriorate. However, for example, when another vehicle traveling in another intersecting travel lane suddenly crosses in front of the host vehicle M or when a pedestrian suddenly enters the current travel lane, making an emergency stop is considered necessary even if the travel speed is suddenly changed regardless of the ride comfort. In this way, the scene on the general road as shown in FIG. 3, which was used as the basis for formulating the objective function, includes a scene in which both acceleration and jerk control are required when the host vehicle M is traveling.

In contrast, in the restricting conditional formulas defined in the basic objective function, the acceleration-restricting conditional formula of the above formulas (8) and (9), and the jerk-restricting conditional formula of the above formulas (10) and (11) are defined. In other words, in the basic objective function, the restricting conditional formulas for acceleration a and the formulas for jerk j are defined separately. For this reason, in a scene in which it is necessary to control both acceleration and jerk as described above, although the change in the travel speed will be excessive if the restricting conditional formula is in a state in which an action can be appropriately taken for an emergency and the change in a travel speed will be gentle if the restricting conditional formula is in a state in which a normal travel is prioritized, there is a concern that it will be impossible to perform the avoidance or stopping action required in an emergency.

Therefore, auxiliary variables corresponding to each scene are applied to the basic objective function formulated as shown in the above formula (5) and the restricting conditional formulas defined as shown in the above formulas (6) to (16).

[First example of auxiliary variables]

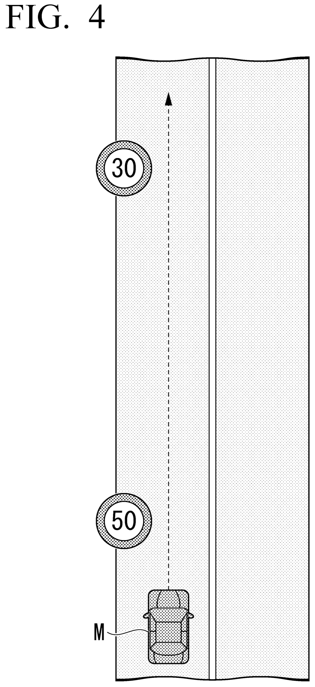

Hereinafter, a scene in which an auxiliary variable is applied to an objective function and an auxiliary variable corresponding to the scene will be described. FIG. 4 is a diagram showing an example of a first scene in which an auxiliary variable is applied to the objective function. The first scene shown in FIG. 4 is a scene in which the speed limit is changed in the current travel lane in which the host vehicle M is traveling. In FIG. 4, a scene in which the speed limit of the current travel lane is changed from 50 [km/h] to 30 [km/h] is shown. In this first scene, it is considered preferable to gradually reduce the travel speed from a point where the speed limit changes without suddenly changing a speed at a point where the speed limit changes so that the deterioration in the ride comfort of the host vehicle M is prevented.

For this reason, an auxiliary variable $o_t$ is added to the basic objective function formulated as shown in the above formula (5), and the objective function corresponding to the first scene is set as shown in the following formula (18).

$$\underset{\substack{a \in \mathbb{R}^n \\ o \in \{0,1\}^n}}{\text{maximize}} \quad \sum_{t=1}^{n} \omega_t s_t + C_o \sum_{t=1}^{n} o_t \qquad \cdots \ (18)$$

In the above formula (18), the auxiliary variable $o_t$ is a binary variable of "0" or "1" indicating whether or not the position st has reached a change point of the speed limit (hereinafter referred to as a "speed limit change point $s_{th}$"). In the following description, the auxiliary variable $o_t$ is referred to as a "vehicle speed limit auxiliary variable ot." The vehicle speed limit auxiliary variable $o_t$ is an example of a "first auxiliary variable." The above formula (18) is an example of a "first objective function."

Also, in the first scene, a relationship between the position st, the vehicle speed limit auxiliary variable ot, and the speed limit change point $s_{th}$ is as shown in the following formula (19).

$$s_t \geq o_t s_{th} \qquad \cdots \ (19)$$

If the vehicle speed limit auxiliary variable $o_t$ is set to "1" in the above formula (18), a value of the total position st becomes smaller. For this reason, in the above formula (18), it is preferable to set the constant $C_o$ to a sufficiently large value so that it is possible to confirm that the value of the total position st becomes small.

Also, in the vehicle-speed-restricting conditional formula corresponding to the first scene, a term related to the difference in the speed limit (the second term on the right side) is added to the vehicle-speed-restricting conditional formula related to the upper limit of the speed v shown in the above formula (6) and defined like the following formula (20). The following formula (20) is an example of a "first restricting conditional formula."

$$v_t + a_t \Delta t / 2 \leq v_{max(1)} + o_t \left( v_{max(2)} - v_{max(1)} \right) \qquad \cdots \ (20)$$

In the above formula (20), $v_{max(1)}$ denotes a maximum speed $v_{max}$ of the host vehicle M before the speed limit is changed (50 [km/h] in FIG. 4), and $v_{max(2)}$ denotes a maximum speed $v_{max}$ of the host vehicle M after the speed limit is changed (30 [km/h] in FIG. 4). Thereby, for example, in the first scene shown in FIG. 4, because the speed limit is changed to a slower one, when the position st passes the point $s_{th}$, the vehicle speed limit auxiliary variable $o_t$ becomes "1," and a value of the total position st becomes smaller as described above. At this time, in the objective function corresponding to the first scene in the above formula (18), the decrease in the total position st is compensated for by the second term on the right side. Also, when the vehicle speed limit auxiliary variable $o_t$ becomes "1," a trigger is applied to change the speed v of the host vehicle M according to the vehicle-speed-restricting conditional formula shown in the above formula (20), and a change from the maximum speed $v_{max(1)}$ to the maximum speed $v_{max(2)}$ starts.

In the first scene shown in FIG. 4, a scene in which the speed limit is changed to a slower one is shown. In contrast, in a scene in which the speed limit is increased, because the maximum speed $v_{max(2)}$ is greater than the maximum speed $v_{max(1)}$ (the maximum speed $v_{max}$ is higher), the vehicle speed limit auxiliary variable $o_t$ becomes "1."

In the objective function shown in the above formula (18), a relational formula shown in the above formula (19) and the vehicle-speed-restricting conditional formula shown in the above formula (20), time t is also in the range of 1 to n (see the above formula (12)). Because the other restricting conditional formula in the first scene is the same as the restricting conditional formula in the basic scene described above, detailed description will be omitted.

Although an example in which the travel speed is reduced from the point where the speed limit changes in the first scene has been described, for example, it is also possible to gradually reduce the travel speed from a point that is a certain distance before the point where the speed limit changes so that the changed travel speed is reached at the point where the speed limit changes. In this case, it is only necessary to set the speed limit change point $s_{th}$ to a point before the point where the speed limit changes so that it is equivalent to the first scene described above.

[Second example of auxiliary variables]

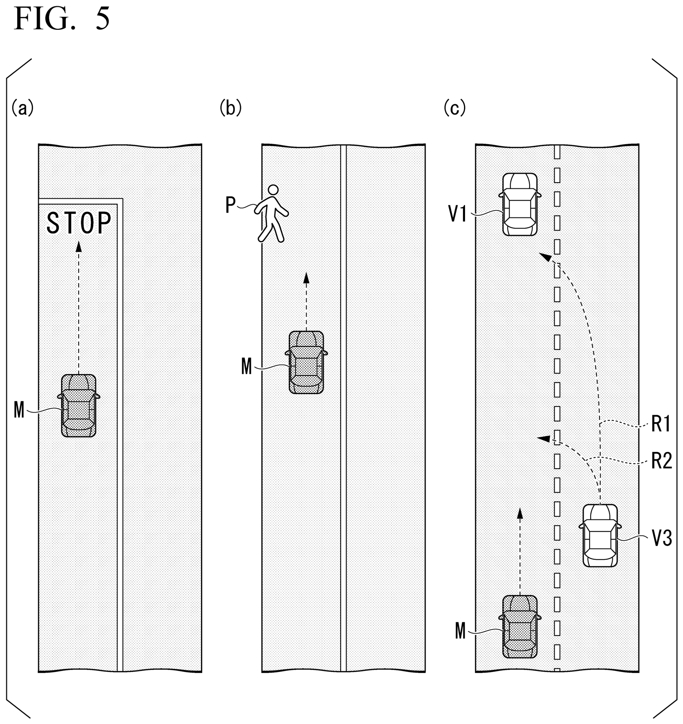

FIG. 5 shows an example of a second scene in which auxiliary variables are applied to the objective function. The second scene shown in FIG. 5 is a mixture in which a scene in which a sudden change in a travel speed is required and a scene in which a sudden change in the travel speed is not required. In part (a) of FIG. 5, a scene in which the vehicle temporarily stops at a stop line in the current travel lane, i.e., a scene in which a sudden change in the travel speed is not required, is shown. In part (b) of FIG. 5, a scene in which, for example, a pedestrian P suddenly enters the current travel lane, i.e., a scene in which a sudden change in the travel speed is required, is shown. In part (c) of FIG. 5, a scene in which another vehicle V3 traveling in an adjacent lane changes lane and is located between the other vehicle V1 and the host vehicle M when a travel process is performed while another vehicle V1 (a preceding vehicle) is tracked as a tracking target is shown. In the scene shown in part (c) of FIG. 5, when the other vehicle V3 approaches a position far in front of the host vehicle M on a route R1, it is unnecessary to suddenly change the travel speed to avoid a collision. However, when the other vehicle V3 approaches a position near in front of the host vehicle M on the route R2, it is necessary to suddenly change the travel speed so that a collision with the other vehicle V3 is avoided. In this way, in the second scene, changing the travel speed in accordance with the situation at that time is considered to be preferable from the viewpoint of preventing deterioration in the ride comfort of the host vehicle M.

For this reason, an auxiliary variable et is added to the basic objective function formulated as shown in the above formula (5) and the objective function corresponding to the second scene is given like the following formula (21).

$$\underset{\substack{a \in \mathbb{R}^n \\ e \in [0,1]^n}}{\text{maximize}} \quad \sum_{t=1}^{n} \omega_t s_t - C_e \sum_{t=1}^{n} e_t \qquad \cdots \ (21)$$

In the above formula (21), the auxiliary variable et is a variable that denotes a degree of urgency in a positional relationship with other traffic participants (e.g., people, bicycles, and vehicles) during the travel. In other words, the auxiliary variable et is a variable that denotes whether or not it is a situation in which it is necessary to suddenly change the travel speed. The auxiliary variable et is not a binary value like the vehicle speed limit auxiliary variable ot, but is a variable between "0" and "1" indicating a degree of urgency for avoiding a collision with another traffic participant (avoidance target). In the following description, the auxiliary variable et is referred to as an "urgency auxiliary variable et." The urgency auxiliary variable et takes a larger value (a value closer to "1") as the degree of urgency for avoiding a collision with the avoidance target increases. The urgency auxiliary variable et is an example of a "second auxiliary variable." The above formula (21) is an example of a "second objective function."

Also, in the restricting conditional formula corresponding to the second scene, a term related to the difference (the second term on the right side) is added to each of the acceleration-restricting conditional formula and the jerk-restricting conditional formula. More specifically, the acceleration-restricting conditional formula for the upper limit of acceleration a shown in the above formula (8) is defined like the following formula (22), and the acceleration-restricting conditional formula for the lower limit of acceleration a shown in the above formula (9) is defined like the following formula (23). The jerk-restricting conditional formula related to the upper limit of jerk j shown in the above formula (10) is defined like the following formula (24) and the jerk-restricting conditional formula related to the lower limit of jerk j shown in the above formula (11) is defined like the following formula (25).

$$a_t \leq a_{\text{ptyp}} + e_t \left( a_{\text{max}} - a_{\text{ptyp}} \right) \qquad \cdots \ (22)$$

$$a_t \leq a_{\text{ntyp}} + e_t \left( a_{\text{max}} - a_{\text{ntyp}} \right) \qquad \cdots \ (23)$$

$$\frac{a_t - a_{(t-1)}}{\Delta t} \le j_{\text{ptyp}} + e_t \left( j_{\text{max}} - j_{\text{ptyp}} \right) \qquad \cdots \ (2\,4)$$

$$\frac{a_t - a_{(t-1)}}{\Delta t} \ge j_{\text{ntyp}} + e_t \left( j_{\text{min}} - j_{\text{ntyp}} \right) \qquad \cdots \ (2\,5)$$

In the above formula (22), $a_{\text{ptyp}}$ denotes standard acceleration generally considered when a vehicle (here, the host vehicle M) is accelerated. In the above formula (23), $a_{\text{ntyp}}$ denotes standard acceleration (negative acceleration) generally considered when a vehicle (here, the host vehicle M) is decelerated. In the above formula (24), $j_{\text{ptyp}}$ denotes a standard jerk generally considered when a vehicle (here, the host vehicle M) is accelerated. In the above formula (23), $j_{\text{ntyp}}$ denotes a standard jerk (negative jerk) generally considered when a vehicle (here, the host vehicle M) is decelerated.

In the restricting conditional formulas shown in the above formulas (22) to (25), the restrictions on acceleration a and jerk j of the host vehicle M can be relaxed in accordance with the degree of urgency. By setting the constant $C_e$ of the objective function shown in the above formula (21) to a sufficiently large value, the relaxation of the restrictions in the restricting conditional formulas shown in the above formulas (22) to (25) can be disabled. In each of the restricting conditional formulas shown in the above formulas (22) to (25), the second term on the right side related to the difference is related to the urgency auxiliary variable et. For this reason, it is preferable to include a sum of the urgency auxiliary variables et in the objective function corresponding to the second scene shown in the above formula (21) so that the restrictions are prevented from being relaxed more than necessary by the restricting conditional formulas shown in the above formulas (22) to (25).

In the objective function shown in the above formula (18) and the restricting conditional formulas shown in the above formulas (22) to (25), time t is in the range of 1 to n (see the above formula (12)).

Furthermore, in the vehicle-speed-restricting conditional formula corresponding to the second scene, a term related to the urgency auxiliary variable et (the second term on the right side) is added to the tracking-restricting conditional formula related to a process for tracking the tracking target shown in the above formula (13) and is defined as in the following formula (26), and the collision-avoidance-restricting conditional formula related to the avoidance of a collision with the avoidance target shown in the above formula (15) is defined like the following formula (27).

$$v_t + a_t \Delta t / 2 \le v_{\text{fol}(t)} \left( 1 + r_{\text{fol}} \frac{d_{\text{fol}(t)} - d_{\text{idl}(t)}}{d_{\text{idl}(t)}} \right) + e_t c$$

$$\cdots \ (2\,6)$$

$$s_t \le s_{\text{fol}(t)} \qquad \cdots \ (2\,7)$$

In the above formula (26), $r_{\text{fol}}$ denotes an adjustment of the travel speed when the tracking target is tracked. In the tracking-restricting conditional formula shown in the above formula (26), time t is also within a specific interval range from the start to the end of tracking (see the above formula (14)). In the above formula (27), $s_{\text{fol}(t)}$ denotes a position of the tracking target at time t. In the collision-avoidance-restricting conditional formula shown in the above formula (27), time t is also within a specific interval range from the start to the end of avoidance (see the above formula (16)). Because the other restricting conditional formulas in the second scene are the same as those in the basic scene described above, detailed description is omitted. $r_{\text{fol}}$ is an example of a "term for adjusting the travel speed of the host vehicle." The above formulas (26) and (27) are examples of a "second restricting conditional formula." The above formula (26) is an example of a "(2-1)$^{\text{th}}$ restricting conditional formula." The above formula (27) is an example of a "(2-2)$^{\text{th}}$ restricting conditional formula."

The host vehicle M changes its travel speed according to the situation of each of the second scenes shown in FIG. 5 using the objective function shown in the above formula (21) and the restricting conditional formulas shown in the above formulas (22) to (27). More specifically, in the second scene shown in part (a) of FIG. 5, the host vehicle M temporarily stops at the stop line while reducing its travel speed from just before the stop line shown in the current travel lane. In other words, the host vehicle M temporarily stops at the stop line gently. On the other hand, in the second scene shown in part (b) of FIG. 5, the host vehicle M makes an emergency stop regardless of the ride comfort so that a collision with the pedestrian P (the avoidance target) is avoided when the recognition part 130 recognizes an intruding pedestrian P. Furthermore, in the second scene shown in part (c) of FIG. 5, the host vehicle M changes its travel speed in accordance with the position of the other vehicle V3 located between the host vehicle M and the other vehicle V1 (the preceding vehicle) that is being tracked as a tracking target. In other words, when the other vehicle V3 approaches a position far in front of the host vehicle M on a route R1, the vehicle speed is not changed or is slowly decelerated, and when the other vehicle V3 approaches a position near in front of the host vehicle M on a route R2, the vehicle speed is significantly decelerated. Alternatively, in some cases, an emergency stop is made to avoid a collision with the other vehicle V3 (the avoidance target).

[Third example of auxiliary variable]

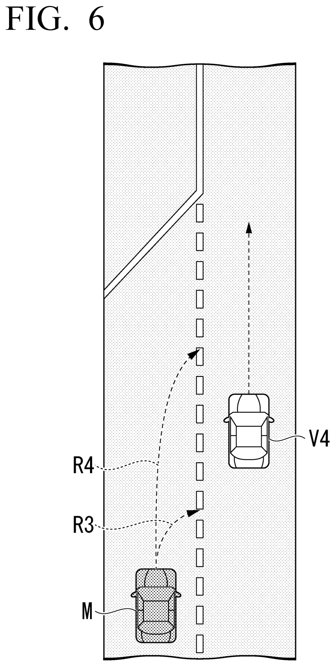

FIG. 6 is a diagram showing an example of a third scene in which an auxiliary variable is applied to an objective function. The third scene shown in FIG. 6 is a scene in which the host vehicle M needs to adjust its speed when merging into an adjacent lane. In this scene shown in FIG. 6, when the host vehicle M is located behind the other vehicle V4 traveling in the adjacent lane on a route R3 and merges into the route R3, it is considered necessary to decrease the travel speed to ensure a distance between the host vehicle M and the other vehicle V4, and when the host vehicle M is located in front of the other vehicle V4 on a route R4 and merges into the route R4, it is considered necessary to increase the vehicle speed to prevent the other vehicle V4 from making an emergency stop. In this third scene, changing the travel speed in accordance with the situation at that time is also considered to be preferable from the viewpoint of preventing the deterioration in the ride comfort of the host vehicle M.

For this reason, auxiliary variables $r_{fol}$ and $f_{avo}$ are introduced into the basic objective function formulated as shown in the above formula (5), and the objective function corresponding to the third scene is set like the following formula (28). However, the objective function itself is not changed to maximize a value of the total position st (or the auxiliary variable is not added).

$$\underset{\substack{a \in \mathbb{R}^n \\ f_{\text{fol}}, f_{avo} \in \{0,1\}}}{\text{maximize}} \quad \sum_{t=1}^{n} \omega_t s_t \qquad \cdots \ (28)$$

In the above formula (28), the auxiliary variable $r_{fol}$ is a binary variable of "0" or "1" indicating whether the host vehicle M will be located behind or in front of the other vehicle that is the tracking target, and the auxiliary variable $f_{avo}$ is a binary variable of "0" or "1" indicating whether the host vehicle M will be located behind or in front of the other vehicle that is the avoidance target. In the following description, the auxiliary variable $r_{fol}$ is referred to as a "tracking auxiliary variable $f_{fol}$" and the auxiliary variable $f_{avo}$ is referred to as a "collision avoidance auxiliary variable $f_{avo}$." The tracking auxiliary variable $r_{fol}$ and the collision avoidance auxiliary variable $f_{avo}$ are "0" when the host vehicle M is located in a rearward direction, and "1" when the host vehicle M is located in a forward direction.

Also, in the restricting conditional formula corresponding to the third scene, a term related to the tracking auxiliary variable $r_{fol}$ (the second term on the right side) is added to the tracking-restricting conditional formula related to tracking the tracking target shown in the above formula (13) and defined like the following formula (29), and the collision-avoidance-restricting conditional formula related to collision avoidance shown in the above formula (15) is defined like the following formulas (30) to (33).

$$v_t + a_t \Delta t / 2 \leq v_{\text{fol}(t)} \left( 1 + r_{\text{fol}} \frac{d_{\text{fol}(t)} - d_{\text{idl}(t)}}{d_{\text{idl}(t)}} \right) + f_{\text{fol}} c$$

$$\cdots \quad (29)$$

$$s_t \geq f_{\text{fol}} s_{\text{fol}(t)} \qquad \cdots \quad (30)$$

$$s_t \leq s_{\text{fol}(t)} + f_{\text{fol}} c \qquad \cdots \quad (31)$$

$$s_t \geq f_{\text{avo}} s_{\text{avo}(t)} \qquad \cdots \quad (32)$$

$$s_t \leq s_{\text{avo}(t)} + f_{\text{avo}} c \qquad \cdots \quad (33)$$

In a scene in which the host vehicle M is traveling while tracking a tracking target or a scene in which the host vehicle M is avoiding an avoidance target, when the host vehicle M can be located in front of the tracking target or the avoidance target, the tracking auxiliary variable $r_{\text{fol}}$ and the collision avoidance auxiliary variable $f_{\text{avo}}$ are each set to "1" according to the above formulas (30) and (32). At this time, the constant C is set to a sufficiently large value. In contrast, when the host vehicle M cannot be located in front of the tracking target or the avoidance target (or can be located behind the tracking target or the avoidance target), the tracking auxiliary variable $r_{\text{fol}}$ and the collision avoidance auxiliary variable $f_{\text{avo}}$ are each set to "0" according to the above formulas (31) and (33). The above formulas (30) and (31) are examples of a "(2-4)th restricting conditional formula." The above formulas (32) and (33) are examples of a "fourth restricting conditional formula." $f_{\text{avo}}$ is an example of a "fourth auxiliary variable."

In the tracking-restricting conditional formula shown in the above formula (29), time t is also within a specific interval range from the start to the end of tracking (see the above formula (14)). In the collision-avoidance-restricting conditional formulas shown in the above formulas (30) to (33), time t is also within a specific interval range from the start to the end of avoidance (see the above formula (16)). The other restricting conditional formulas in the third scene are the same as those in the basic scene described above, detailed descriptions are omitted.

Using the objective function shown in the above formula (28) and the restricting conditional formulas shown in the above formulas (29) to (33), the host vehicle M changes (adjusts) its travel speed at the time of merging according to the situation of each of the third scenes shown in FIG. 6. More specifically, in the third scene shown in FIG. 6, when the host vehicle M is located behind the other vehicle V4 on the route R3, the host vehicle M does not change its travel speed or slowly decelerates, and when the host vehicle M is located in front of the other vehicle V4 on the route R4, the host vehicle M does not change its travel speed or slowly accelerates, and merges into the adjacent lane.

As described above, the objective function decision part 142 decides objective functions and auxiliary variables (including restricting conditional formulas) corresponding to the first scene, the second scene, and the third scene in accordance with a travel situation of the host vehicle M recognized by the recognition part 130. In other words, the objective function decision part 142 distinguishes between scenes expected on general roads where it is necessary to consider the positional relationship with other vehicles during the travel, and decides objective functions or auxiliary variables (including restricting conditional formulas) corresponding to the scenes. More specifically, the objective function decision part 142 introduces auxiliary variables to deal with various situations expected on general roads, distinguishes a scene in which the speed limit is changed, a scene in which it is necessary to balance gradual acceleration/deceleration with emergency stops, a scene in which it is necessary to adjust the travel speed, and the like, and decides the objective functions and auxiliary variables (including the restricting conditional formula) corresponding to the scenes.

There are various scenes expected on general roads where it is necessary to consider the positional relationship with other vehicles during the travel, and they are not necessarily distinguished into any of the first, second, and third scenes described above. For this reason, the objective function decision part 142 can, for example, combine any two or all of the first, second, and third scenes and decide the objective function and auxiliary variables (including the restricting conditional formula) corresponding to that scene. For example, the objective function decision part 142 can combine the tracking-restricting conditional formula corresponding to the second scene with the tracking-restricting conditional formula corresponding to the third scene to decide the tracking-restricting conditional formula expressed as in the following formula (34) as the tracking-restricting conditional formula corresponding to the current scene. The following formula (34) is an example of a "third restricting conditional formula" and a "$(2\text{-}3)^{th}$ restricting conditional formula." $f_{fol}c$ is an example of a "third auxiliary variable."

$$v_t + a_t \Delta t / 2 \leq v_{\mathrm{fol}(t)} \left( 1 + r_{\mathrm{fol}} \frac{d_{\mathrm{fol}(t)} - d_{\mathrm{idl}(t)}}{d_{\mathrm{idl}(t)}} \right) + e_t c + f_{\mathrm{fol}} c$$

$$\cdots \quad (34)$$

The speed decision part 144 decides a future speed at which the host vehicle M will travel on the basis of the objective function and auxiliary variables (including the restricting conditional formula) decided by the objective function decision part 142. In other words, the speed decision part 144 decides a future speed according to the expected scene on a general road where it is necessary to consider the positional relationship with other vehicles during the travel.

Therefore, the action plan generation part 140 can generate a target trajectory (a target speed or target acceleration) for achieving both the improvement of the ride comfort of the host vehicle M and the avoidance of collisions (in other words, improving safety) in the scenes shown in, for example, FIGS. 4 to 6. Also, the second controller 160 can perform driving control (speed control) of the host vehicle M according to the target trajectory generated by the action plan generation part 140.

[Example of objective function decision process]

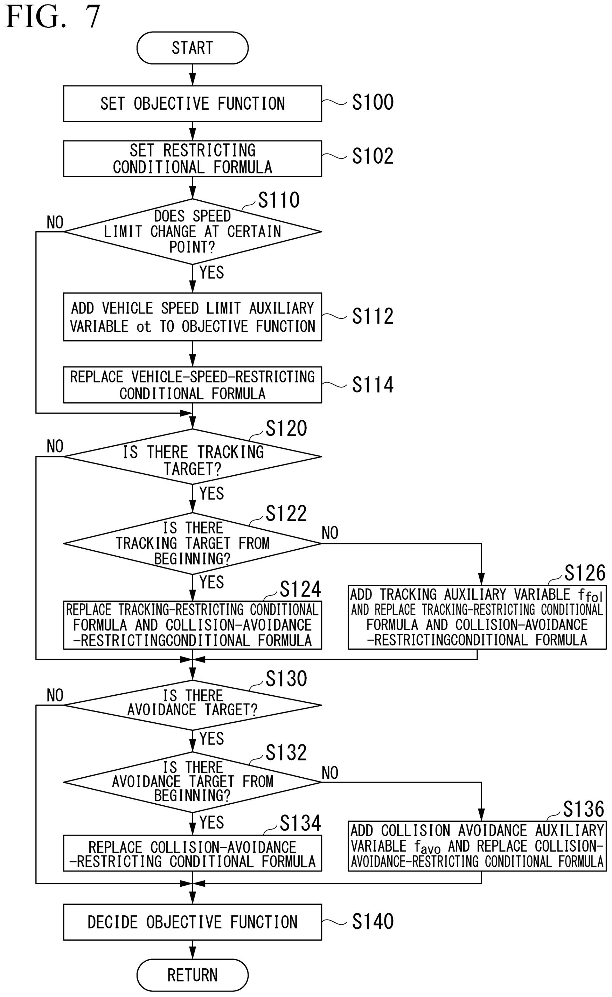

FIG. 7 is a flowchart showing an example of a flow of a process for deciding an objective function executed by the objective function decision part 142. The process of the present flowchart is iteratively executed, for example, while the automated driving control device 100 is operating. In the following description, it is assumed that the recognition part 130 is constantly recognizing the travel situation of the host vehicle M.

When the process of the present flowchart starts, the objective function decision part 142 first sets a formulated basic objective function (step S100). More specifically, the objective function decision part 142 sets the objective function shown in the above formula (5). Also, the objective function decision part 142 sets the restricting conditional formula defined in the set basic objective function (step S102). More specifically, the objective function decision part 142 sets each of the restricting conditional formulas shown in the above formulas (6) to (16).

The objective function decision part 142 determines whether or not the travel situation of the host vehicle M recognized by the recognition part 130 is a scene in which the speed limit changes at a certain point (step S110). That is, the objective function decision part 142 determines whether or not the scene is a scene in which the speed limit is changed in the current travel lane in which the host vehicle M is traveling, for example, such as the first scene shown in FIG. 4. When it is determined that the travel situation of the host vehicle M recognized by the recognition part 130 is not a scene in which the speed limit changes at a certain point in step S110, the objective function decision part 142 moves the process to step S120.

On the other hand, when it is determined that the travel situation of the host vehicle M recognized by the recognition part 130 is a scene in which the speed limit changes at a certain point in step S110, the objective function decision part 142 adds the vehicle speed limit auxiliary variable $o_t$ to the set objective function (step S112). In other words, the objective function decision part 142 changes the objective function shown in the above formula (5) to the objective function shown in the above formula (18) to perform a reset process.

For ease of description, it is assumed that in each of the subsequent processes, an auxiliary variable is added and the currently set objective function is changed to the objective function corresponding to the added auxiliary variable to perform a reset process.

Also, the objective function decision part 142 replaces a vehicle-speed-restricting conditional formula (step S114). More specifically, the objective function decision part 142 replaces the vehicle-speed-restricting conditional formula shown in the above formula (6) defined in the basic objective function before the reset process with the vehicle-speed-restricting conditional formula shown in the above formula (20) corresponding to the reset objective function. Also, the objective function decision part 142 moves the process to step S120.

The objective function decision part 142 determines whether or not the travel situation of the host vehicle M recognized by the recognition part 130 is a scene in which there is a tracking target (step S120). That is, the objective function decision part 142 determines whether or not the scene is, for example, a scene in which the host vehicle M is traveling while tracking a preceding vehicle (another vehicle V1) as a tracking target, such as the second scene shown in part (c) of FIG. 5. When it is determined that the travel situation of the host vehicle M recognized by the recognition part 130 is not a scene in which there is a tracking target in step S120, the objective function decision part 142 moves the process to step S130.

On the other hand, when it is determined that the travel situation of the host vehicle M recognized by the recognition part 130 is a scene in which there is a tracking target in step S120, the objective function decision part 142 determines whether or not there is a tracking target from the beginning (step S122). In other words, the objective function decision part 142 determines whether the tracking target is a vehicle that has already been recognized and is being tracked or a vehicle that has been newly recognized and will start to be tracked. More specifically, the objective function decision part 142 determines whether or not the current tracking target is another vehicle V1 in the second scene, for example, shown in part (c) of FIG. 5.

When it is determined that there is a tracking target from the beginning in step S122, the objective function decision part 142 replaces the tracking-restricting conditional formula and the collision-avoidance-restricting conditional formula (step S124). More specifically, the objective function decision part 142 replaces the tracking-restricting conditional formula defined in the currently set objective function with the tracking-restricting conditional formula shown in the above formula (26), and replaces the collision-avoidance-restricting conditional formula with the collision-avoidance-restricting conditional formula shown in the above formula (27). Also, the objective function decision part 142 moves the process to step S130.

On the other hand, when it is determined that there is no tracking target from the beginning in step S122, the objective function decision part 142 adds a tracking auxiliary variable $f_{fol}$ and replaces the tracking-restricting conditional formula and the collision-avoidance-restricting conditional formula (step S126). More specifically, for example, in the second scene shown in part (c) of FIG. 5, the objective function decision part 142 adds a tracking auxiliary variable $r_{fol}$ to the currently set objective function when it is determined that the current tracking target has changed from the other vehicle V1 to the other vehicle V3 since the other vehicle V3 has changed lane and has come in between the other vehicle V1 and the host vehicle M,. Also, the objective function decision part 142 replaces the tracking-restricting conditional formula defined in the currently set objective function with the tracking-restricting conditional formula shown in the above formula (34), and replaces the collision-avoidance-restricting conditional formula with the collision-avoidance-restricting conditional formulas shown in the above formulas (30) and (31). Also, the objective function decision part 142 moves the process to step S130.

The objective function decision part 142 determines whether the travel situation of the host vehicle M recognized by the recognition part 130 is a scene in which there is an avoidance target (step S130). That is, the objective function decision part 142 determines whether the scene is, for example, a scene in which it is necessary to avoid a collision with another vehicle V3 in the second scene shown in part (c) of FIG. 5 or another vehicle V4 in the third scene shown in FIG. 6. When the recognition part 130 determines that the travel situation of the host vehicle M recognized is not a scene in which there is an avoidance target in step S130, the objective function decision part 142 moves the process to step S140.

On the other hand, when the recognition part 130 determines that the travel situation of the host vehicle M recognized by the recognition part 130 is a scene in which there is an avoidance target in step S130, the objective function decision part 142 determines whether or not there is an avoidance target from the beginning (step S132). That is, the objective function decision part 142 determines whether the avoidance target is a vehicle that has already been recognized and is being monitored for avoidance or a vehicle that has been newly recognized and for which monitoring starts for avoidance. More specifically, the objective function decision part 142, for example, determines whether or not another vehicle V3 in the second scene shown in part (c) of FIG. 5 or another vehicle V4 in the third scene shown in FIG. 6 has been recognized.

When it is determined that there is an avoidance target from the beginning in step S132, the objective function decision part 142 replaces the collision-avoidance-restricting conditional formula (step S134). More specifically, the objective function decision part 142 replaces the collision-avoidance-restricting conditional formula defined in the currently set objective function with the collision-avoidance-restricting conditional formula shown in the above formula (19). Also, the objective function decision part 142 moves the process to step S140.

On the other hand, when it is determined that there is no avoidance target from the beginning in step S132, the objective function decision part 142 adds the collision avoidance auxiliary variable $f_{avo}$ and replaces the collision-avoidance-restricting conditional formula (step S136). More specifically, for example, in the second scene shown in part (c) of FIG. 5, when another vehicle V3 is located at a position forward close to the host vehicle M on the route R2, the objective function decision part 142 adds the collision avoidance auxiliary variable $f_{avo}$ to the currently set objective function. Also, the objective function decision part 142 replaces the collision-avoidance-restricting conditional formula defined in the currently set objective function with the collision-avoidance-restricting conditional formula shown in the above formulas (32) and (33). Also, the objective function decision part 142 moves the process to step S140.

The objective function decision part 142 decides the currently set objective function and auxiliary variables (including the restricting conditional formula) as the objective function and auxiliary variables (including the restricting conditional formula) corresponding to the current scene (step S140). Also, the objective function decision part 142 returns the process to step S100.

Through this process, the objective function decision part 142 decides the objective function and auxiliary variables (including the restricting conditional formula) according to the travel situation of the host vehicle M recognized by the recognition part 130. Thereby, the speed decision part 144 decides a future speed at which the host vehicle M will travel on the basis of the objective function and auxiliary variables (including the restricting conditional formula) decided by the objective function decision part 142. Also, the action plan generation part 140 generates a target trajectory (a target speed and target acceleration) that achieves both improved ride comfort and collision avoidance (in other words, improved safety) for the host vehicle M, and the second controller 160 performs travel control (speed control) of the host vehicle M according to the generated target trajectory.

As described above, according to the vehicle control device of the embodiment, the recognition part 130 within the first controller 120 provided in the automated driving control device 100 recognizes the travel situation of the host vehicle M. Also, in the vehicle control device of the embodiment, the objective function decision part 142 provided in the action plan generation part 140 within the first controller 120 provided in the automated driving control device 100 decides a formulated objective function and auxiliary variables (including a restricting conditional formula) used when making a speed plan taking into account the positional relationship with other traffic participants (e.g., people, bicycles, and vehicles) during the travel on a general road in accordance with the travel situation of the host vehicle M recognized by the recognition part 130. Thereby, in the vehicle control device of the embodiment, the speed decision part 144 provided in the action plan generation part 140 within the first controller 120 provided in the automated driving control device 100 decides a future speed at which the host vehicle M will travel, on the basis of the objective function and auxiliary variables (including a restricting conditional formula) decided by the objective function decision part 142. Also, in the vehicle control device of the embodiment, the action plan generation part 140 within the first controller 120 provided in the automated driving control device 100 generates a target trajectory (a target speed and target acceleration) along which the host vehicle M will travel in the future, and the second controller 160 performs travel control (speed control) of the host vehicle M according to the target trajectory generated by the action plan generation part 140. Thereby, the vehicle control device of the embodiment can cause the host vehicle M to automatically travel (without relying on the driver's operation) while achieving both improved ride comfort and improved safety (collision avoidance).

In the embodiment, no particular description is given regarding the time intervals of the vehicle speed limit auxiliary variable $o_t$ and time t for the urgency auxiliary variable et. However, the respective time intervals may be the same or different. For example, the time intervals of the acceleration a may be 0.1 "sec" intervals such as 0.1 "sec," 0.2 "sec," 0.3 "sec," ..., 5.0 "sec," the time intervals of the vehicle speed limit auxiliary variable $o_t$ for determining whether or not the position st has reached the speed limit change point $s_{th}$ may be 0.5 "sec" intervals such as 0.5 "sec," 1.0 "sec," 1.5 "sec," ..., 5.0 "sec," and the time intervals of the urgency auxiliary variable et for determining the degree of urgency for avoiding a collision with another traffic participant may be 1.0 "sec" intervals such as 1.0 "sec," 2.0 "sec," 3.0 "sec," ..., 5.0 "sec." By varying the time intervals in this way, the load of the objective function decision part 142 in determining the objective function and auxiliary variables (including the restricting conditional formula) can be reduced.

The embodiment described above can be represented as follows.

A vehicle control device including:

a hardware processor; and
a storage device storing a program,
wherein the hardware processor reads and executes the program stored in the storage device to:

decide a combination of (ii) an objective function, in which acceleration in future travel is designated as a control variable formulated using an auxiliary variable corresponding to a predetermined scene assumed from a positional relationship with another traffic participant during travel of a host vehicle, and (ii) a restricting conditional formula for setting a restriction on the future travel in accordance with a recognized surrounding situation of the host vehicle; and
decide a travel speed in the future travel of the host vehicle on the basis of the combination of the objective function and the restricting conditional formula,
wherein the auxiliary variable is a variable related to a vehicle speed limit, a degree of urgency, tracking, and collision avoidance corresponding to the scene.

In the embodiment, a case in which the objective function decision part 142 determines the formulated objective function and auxiliary variables (including the restricting conditional formula) in a predetermined scene in which it is necessary to consider the positional relationship with other traffic participants (e.g., people, bicycles, and vehicles) during the travel on a general road has been described. However, the formulated objective function and auxiliary variables (including the restricting conditional formula) described above are not limited to general roads. For example, the first scene shown in FIG. 4, the second scene shown in part (c) of FIG. 5, and the third scene shown in FIG. 6 are also assumed when the host vehicle M is traveling on an expressway. For this reason, the objective function, the restricting conditional formula, and the auxiliary variables shown in the above formulas (5) to (34) can be appropriately adopted even if the host vehicle M is traveling on an expressway. In this case, it is only necessary for the configuration and process of the vehicle control device (more specifically, the process for determining the objective function executed by the objective function decision part 142) to be equivalent to the configuration and process of the automated driving control device 100 of the embodiment.

Although modes for carrying out the present invention have been described using embodiments, the present invention is not limited to the embodiments and various modifications and substitutions can also be made without departing from the scope of the present invention.

**Claims**

1. A vehicle control device comprising:

   an objective function decision part configured to decide a combination of (i) an objective function, in which acceleration in future travel is designated as a control variable formulated using an auxiliary variable corresponding to a predetermined scene assumed from a positional relationship with another traffic participant during travel of a host vehicle, and (ii) a restricting conditional formula for setting a restriction on the future travel, in accordance with a recognized surrounding situation of the host vehicle; and
   a speed decision part configured to decide a travel speed in the future travel of the host vehicle on the basis of the combination of the objective function and the restricting conditional formula,
   wherein the auxiliary variable is a variable related to a vehicle speed limit, a degree of urgency, tracking, and collision avoidance corresponding to the scene.

2. The vehicle control device according to claim 1,

   wherein the restricting conditional formula includes conditional formulas for setting restrictions related to a vehicle speed, acceleration, and a jerk when the host vehicle is allowed to travel, and
   wherein a term for adding 1/2 of the acceleration during the travel of the host vehicle is provided in the restricting conditional formula corresponding to the vehicle speed.

3. The vehicle control device according to claim 2,

   wherein the restricting conditional formula further includes a conditional formula for setting a restriction related to a process for tracking a preceding vehicle and a process for avoiding a collision with the other traffic participant, and
   wherein a term for adjusting a travel speed during the travel of the host vehicle is provided in the restricting conditional formula corresponding to the tracking.

4. The vehicle control device according to any one of claims 1 to 3,

   wherein the objective function decision part decides a combination of a first objective function formulated using a first auxiliary variable related to the vehicle speed limit and a first restricting conditional formula corresponding to a vehicle speed when the scene is a first scene in which a speed limit of a lane in which the host vehicle will travel is changed, and
   wherein the first restricting conditional formula has a term for adding a restriction based on the first auxiliary variable and a difference between maximum speeds of the host vehicle before and after the speed limit is changed.

5. The vehicle control device according to any one of claims 1 to 4,

   wherein the objective function decision part decides a combination of (i) a second objective function formulated using a second auxiliary variable related to the degree of urgency based on a positional relationship between the host vehicle and the preceding vehicle and (ii) a second restricting conditional formula, if a preceding vehicle is already a tracking target when the scene is a second scene in which the host vehicle tracks the preceding vehicle, and

wherein the second restricting conditional formula includes a $(2\text{-}1)^{th}$ restricting conditional formula in which a term for adding the second auxiliary variable to the restricting conditional formula corresponding to the tracking is provided and a $(2\text{-}2)^{th}$ restricting conditional formula corresponding to the collision avoidance indicating a position of the preceding vehicle.

6. The vehicle control device according to claim 5,

wherein the objective function decision part decides a combination of the second objective function and a third restricting conditional formula if the preceding vehicle is a new tracking target when the scene is the second scene in which the host vehicle tracks the preceding vehicle, and

wherein the third restricting conditional formula has a $(2\text{-}3)^{th}$ restricting conditional formula in which a term for adding a third auxiliary variable related to the tracking is further provided in the $(2\text{-}1)^{th}$ restricting conditional formula and a $(2\text{-}4)^{th}$ restricting conditional formula in which a term for adding the third auxiliary variable is further provided in the $(2\text{-}2)^{th}$ restricting conditional formula.

7. The vehicle control device according to any one of claims 1 to 6, wherein the objective function decision part decides a combination of the objective function and the restricting conditional formula related to the collision avoidance if the other traffic participant is already an avoidance target when the scene is a third scene for avoiding a collision with the other traffic participant.

8. The vehicle control device according to claim 7,

wherein the objective function decision part decides a combination of the objective function and a fourth restricting conditional formula if the other traffic participant is a new avoidance target when the scene is the third scene for avoiding a collision with the other traffic participant, and

wherein the fourth restricting conditional formula has a term of a fourth auxiliary variable related to the collision avoidance in the restricting conditional formula related to the collision avoidance.

9. A vehicle control method comprising:

deciding, by a computer, a combination of (i) an objective function, in which acceleration in future travel is designated as a control variable formulated using an auxiliary variable corresponding to a predetermined scene assumed from a positional relationship with another traffic participant during travel of a host vehicle, and (ii) a restricting conditional formula for setting a restriction on the future travel, in accordance with a recognized surrounding situation of the host vehicle; and

deciding, by the computer, a travel speed in the future travel of the host vehicle on the basis of the combination of the objective function and the restricting conditional formula,

wherein the auxiliary variable is a variable related to a vehicle speed limit, a degree of urgency, tracking, and collision avoidance corresponding to the scene.

10. A computer-readable non-transitory storage medium storing a program for causing a computer to:

decide a combination of (i) an objective function, in which acceleration in future travel is designated as a control variable formulated using an auxiliary variable corresponding to a predetermined scene assumed from a positional relationship with another traffic participant during travel of a host vehicle, and (ii) a restricting conditional formula for setting a restriction on the future travel, in accordance with a recognized surrounding situation of the host vehicle; and

decide a travel speed in the future travel of the host vehicle on the basis of the combination of the objective function and the restricting conditional formula,

wherein the auxiliary variable is a variable related to a vehicle speed limit, a degree of urgency, tracking, and collision avoidance corresponding to the scene.

# FIG. 1

<u>1</u>

```
CAMERA ──10──┐
              │
RADAR DEVICE ──12──┤──► PHYSICAL ──16
              │      OBJECT
LIDAR ──14──┘      RECOGNITION
                    DEVICE
```

CAMERA /10

RADAR DEVICE /12

LIDAR /14

PHYSICAL OBJECT RECOGNITION DEVICE /16

COMMUNICATION DEVICE /20

HMI /30

VEHICLE SENSOR /40

AUTOMATED DRIVING CONTROL DEVICE /100

FIRST CONTROLLER /120

SECOND CONTROLLER /160

DRIVING OPERATION ELEMENTS /80

TRAVEL DRIVING FORCE OUTPUT DEVICE /200

BRAKE DEVICE /210

STEERING DEVICE /220

NAVIGATION DEVICE /50

GNSS RECEIVER /51

NAVIGATION HMI /52

ROUTE DECISION PART /53

FIRST MAP INFORMATION /54

MPU /60

RECOMMENDED LANE DECISION PART /61

SECOND MAP INFORMATION /62

# FIG. 2

100

FIRST CONTROLLER — 120

RECOGNITION PART — 130

RECOGNITION RESULT

ACTION PLAN GENERATION PART — 140

OBJECTIVE FUNCTION DECISION PART — 142

SPEED DECISION PART — 144

TARGET TRAJECTORY

SECOND CONTROLLER — 160

ACQUISITION PART — 162

SPEED CONTROLLER — 164

STEERING CONTROLLER — 166

FIG. 3

FIG. 4

FIG. 5

(a)

STOP

M

(b)

P

M

(c)

V1

R1
R2

V3

M

# FIG. 6

## FIG. 7

```
                    ┌──────────┐
                    │  START   │
                    └──────────┘
                         │
                         ▼
        ┌─────────────────────────────┐
        │   SET OBJECTIVE FUNCTION     │──── S100
        └─────────────────────────────┘
                         │
                         ▼
        ┌─────────────────────────────┐
        │       SET RESTRICTING        │──── S102
        │     CONDITIONAL FORMULA      │
        └─────────────────────────────┘
                         │
                         ▼            S110
   NO          ◇ DOES SPEED ◇
  ◄──────────  LIMIT CHANGE AT CERTAIN
   │                 POINT?
   │                   │ YES
   │                   ▼
   │    ┌─────────────────────────────┐
   │    │ ADD VEHICLE SPEED LIMIT      │──── S112
   │    │ AUXILIARY VARIABLE ot TO     │
   │    │ OBJECTIVE FUNCTION           │
   │    └─────────────────────────────┘
   │                   │
   │                   ▼
   │    ┌─────────────────────────────┐
   │    │ REPLACE VEHICLE-SPEED-       │──── S114
   │    │ RESTRICTING CONDITIONAL      │
   │    │ FORMULA                      │
   │    └─────────────────────────────┘
   │                   │
   └───────────────────┤
                       ▼            S120
   NO         ◇ IS THERE TRACKING ◇
  ◄──────────       TARGET?
   │                   │ YES
   │                   ▼            S122
   │         ◇  IS THERE          ◇   NO
   │         TRACKING TARGET FROM    ─────────┐
   │              BEGINNING?                  │
   │                   │ YES                  │
   │                   ▼  S124                ▼  S126
   │   ┌──────────────────────┐  ┌──────────────────────┐
   │   │ REPLACE TRACKING-    │  │ ADD TRACKING AUXILIARY│
   │   │ RESTRICTING          │  │ VARIABLE f_fol AND    │
   │   │ CONDITIONAL FORMULA  │  │ REPLACE TRACKING-     │
   │   │ AND COLLISION-       │  │ RESTRICTING          │
   │   │ AVOIDANCE-RESTRICTING│  │ CONDITIONAL FORMULA  │
   │   │ CONDITIONAL FORMULA  │  │ AND COLLISION-       │
   │   └──────────────────────┘  │ AVOIDANCE-RESTRICTING│
   │                             │ CONDITIONAL FORMULA  │
   │                             └──────────────────────┘
   └───────────────────┤◄───────────────────┘
                       ▼            S130
   NO         ◇ IS THERE          ◇
  ◄──────────  AVOIDANCE TARGET?
   │                   │ YES
   │                   ▼            S132
   │         ◇  IS THERE          ◇   NO
   │         AVOIDANCE TARGET FROM   ─────────┐
   │              BEGINNING?                  │
   │                   │ YES                  ▼  S136
   │                   ▼  S134        ┌──────────────────────┐
   │   ┌──────────────────────┐       │ ADD COLLISION        │
   │   │ REPLACE COLLISION-   │       │ AVOIDANCE AUXILIARY  │
   │   │ AVOIDANCE-RESTRICTING│       │ VARIABLE f_avo AND   │
   │   │ CONDITIONAL FORMULA  │       │ REPLACE COLLISION-   │
   │   └──────────────────────┘       │ AVOIDANCE-RESTRICTING│
   │                                  │ CONDITIONAL FORMULA  │
   │                                  └──────────────────────┘
   └───────────────────┤◄───────────────────┘
                       ▼
        ┌─────────────────────────────┐
        │   DECIDE OBJECTIVE FUNCTION  │──── S140
        └─────────────────────────────┘
                       │
                       ▼
                 ┌──────────┐
                 │  RETURN  │
                 └──────────┘
```

Europäisches
Patentamt
European
Patent Office
Office européen
des brevets

# EUROPEAN SEARCH REPORT

**Application Number**

EP 25 20 7221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 657 137 A (UNITED AUTOMOTIVE ELECT SYS CO) 8 March 2024 (2024-03-08) * paragraphs [0001] - [0017], [0059], [0069] - [0090] * | 1-10 | INV. B60W30/14 B60W50/06 |
| X | US 2022/410889 A1 (BUSSE TIMON [DE] ET AL) 29 December 2022 (2022-12-29) * paragraphs [0003], [0016] - [0020], [0028], [0056] * | 1-10 | |
| A | US 2015/142292 A1 (KASTNER ROBERT [DE] ET AL) 21 May 2015 (2015-05-21) * paragraphs [0005] - [0015], [0024], [0052] - [0060] * | 1-10 | |
| A | CN 117 864 127 A (SUOTUO HANGZHOU AUTOMOBILE INTELLIGENT EQUIPMENT CO LTD ET AL.) 12 April 2024 (2024-04-12) * the whole document * | 1-10 | |
| A | US 2022/289184 A1 (SVENSSON VIKTOR [SE]) 15 September 2022 (2022-09-15) * the whole document * | 1-10 | **TECHNICAL FIELDS SEARCHED (IPC)** B60W |
| A | US 2023/391328 A1 (VAN KOUTRIK SVEN [CH] ET AL) 7 December 2023 (2023-12-07) * the whole document * | 1-10 | |

The present search report has been drawn up for all claims

| Place of search | Date of completion of the search | Examiner |
|---|---|---|
| Munich | 31 March 2026 | Bak, Maciej |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 20 7221

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2026

| Patent document cited in search report | | Publication date | Patent family member(s) | | Publication date |
|---|---|---|---|---|---|
| CN 117657137 | A | 08-03-2024 | NONE | | |
| US 2022410889 | A1 | 29-12-2022 | CN | 114599564 A | 07-06-2022 |
| | | | US | 2022410889 A1 | 29-12-2022 |
| | | | WO | 2021098956 A1 | 27-05-2021 |
| US 2015142292 | A1 | 21-05-2015 | DE | 112012006667 T5 | 16-04-2015 |
| | | | JP | 5897126 B2 | 30-03-2016 |
| | | | JP | WO2014006775 A1 | 02-06-2016 |
| | | | US | 2015142292 A1 | 21-05-2015 |
| | | | WO | 2014006770 A1 | 09-01-2014 |
| | | | WO | 2014006775 A1 | 09-01-2014 |
| CN 117864127 | A | 12-04-2024 | NONE | | |
| US 2022289184 | A1 | 15-09-2022 | CN | 115123233 A | 30-09-2022 |
| | | | EP | 4056441 A1 | 14-09-2022 |
| | | | US | 2022289184 A1 | 15-09-2022 |
| US 2023391328 | A1 | 07-12-2023 | EP | 4211526 A1 | 19-07-2023 |
| | | | US | 2023391328 A1 | 07-12-2023 |
| | | | WO | 2022083873 A1 | 28-04-2022 |

EPO FORM P0459

For more details about this annex : see Official Journal of the European Patent Office, No. 12/82

**REFERENCES CITED IN THE DESCRIPTION**

**Patent documents cited in the description**

• JP 2022107296 A